# EUROPEAN PATENT APPLICATION

(11) **EP 2 151 591 A1**
(43) Date of publication of application: **10.02.2010**
(21) Application number: 08775396.8
(22) Date of filing: 23.05.2008
(51) Int. Cl.: F16B 41/00

(54) **SECURITY SCREW AND NUT, WITH SPECIFIC WRENCHES FOR TIGHTENING AND LOOSENING THEREOF**

(30) Priority: 24.05.2007 ES 200701415
(71) Applicant: TSF Navarra de Tecnicas de Soldadura y Fijacion, Soldadura y Fijación, S.L., Area Industrial Arazuri Calle C 19 - Arazuri 31160 Ocroyen, Navarra (ES)
(72) Inventor: PETRI LARREA, Guillermo, 31160 Orcoyen, Navarra (ES)
(74) Representative: Garcia-Cabrerizo y del Santo, Pedro Maria
(86) International application number: PCT/ES2008/000368
(87) International publication number: WO 2008/142191

(57) **Abstract**

Reusable security screw (or nut), provided to be exclusively tightened with a specific wrench, and to be exclusively loosened with another different specific wrench. It has a head divided into three sets of angular sectors: a) sectors for tightening support (2, 5) which receive the force from the first wrench in order to rotate the screw in a rotational direction; b) sectors for loosening support (3, 6) which receive the force from the second wrench in order to rotate it in the opposite direction; and c) sectors for tightening or loosening (1, 4) which receive the forces from both wrenches. The angles of the different sectors can be modified from one production batch to another in order to increase their inviolability.

## Description

The present invention relates to a screw and a nut which are difficult to detach, once tightened, unless the specific tools for loosening are provided thereof. Namely, a new set of screw and nut, which can be utilized together or separately, both special, which only can be tightened or loosened by means of specific wrenches.

In this manner, this set acquires the character of inviolability, thus presenting the user with the guarantee that only he/she can attach or detach them whenever he/she wants. Moreover, the screw and the nut must also present the possibility of being reusable, i.e. in detaching them, their integrity is not compromised. At the same time, both the screw and its nut must have the property of being indestructible thanks to their head geometries.

Thus, the object of this invention comprises the design of a security screw and nut, both undetachable without the specific wrenches for tightening and loosening. For security reasons, these two wrenches will be designed separately.

### BACKGROUND OF THE INVENTION

Currently, there is a large amount of screws with different types of heads (square, hexagonal ...) that even have different grooves or mortises thereof (Allen, Philips, ...). But as these types of heads are enormously disclosed, manufactured and, marketed, anyone can proceed to their tightening or loosening manipulation with ordinary tools. The same situation exists with the nuts, these being square, hexagonal or any other more or less known geometries.

An important problem arises when the security of a screwed joint exposed to the public has to be guaranteed, in such a way that no one can remove the screws and nuts involved in such a joint as for example, can be the case of the ones utilized in solar panels anchoring, automobile wheels or street furniture supports.

Until now, many solutions had been used. One of the most helpful ones consists in modifying the screw head designs, in such a way that they only can be tightened with a special wrench. However, until now, this type of screws, although can be tightened, are impossible to be loosened as its design does not allow it. For that purpose, if this type of screws has to be removed, they must be broken, thus presenting the drawback that the respective screws are not reusable. Also normally, in these instances the screwed joint pieces are damaged, with the consequent problems that it leads to, especially in the case of solar panels.

Another widespread solution, for example for the automobile screw wheels, is to design screws or nuts with cylindrical heads and several perpendicular recesses on different positions and depths of the head plane. In these recesses, the shoulders of the designed "ad hoc" tightening wrenches, used for both tightening and loosening the respective screws or nuts, are engaged. All or some of these present a first drawback in the course of their production, as they need very precise finishes in order to obtain their geometries and, thus increasing their production costs considerably. A second drawback is that the wrenches are designed, as indicated, to tighten as much as to loosen which compromises the screws or nuts security. These type of screws or nuts can be detached by fraudulent manipulation (drilling a borehole or mechanizing a slot).

In order to solve the inviolability problems, other designers prefer to use cylindrical or spherical screws with Allen housing to which, once tightened, a metal spherical ball is put into their housing by pressure, or a dose of a special adhesive solution is introduced in their housing which once cured, it leads to an extraordinarily resistant ball. The obvious drawback to this solution is that the screws handled this way can not be easily detached and thus leading to excessively complicated solutions, such as breaking the screw head with a radial disc or drilling its Allen housing with a drill.

### DESCRIPTION OF THE INVENTION

Both the security screw and nut proposed in the present invention will be provided with specifically designed heads which will confer them with a very particular morphology. The screw and nut heads will be divided into sectors which will go in pairs and will be diametrically opposed.

The sectors will be named:
a) Sectors for tightening or loosening - Will be the only ones with no cutaway material nor inclined faces. On their faces, these sectors will receive the forces from tightening or loosening the screws or nuts.
b) Sectors for tightening support - Will be provided with inclined faces which receive the forces from the socket wrench for tightening the screws or nuts.
c) Sectors for loosening support - Will be provided with inclined faces which receive the forces from the socket wrench for loosening the screws or nuts.

On the other hand, the tightening socket is very similar to a conventional tightening socket in terms of its external geometry. However, its housing will have a cutaway material specifically designed, and the "additions" of the "negative" of the sectors for tightening support and, only this "additions" material for tightening with this special tightening socket only. In this manner, the tightening socket faces will contact the faces of the sectors for tightening support of the screw or the nut, making the torque application possible in the tightening direction. Likewise, the tightening socket faces will contact the faces of the sectors for tightening support at the moment of the tightening torque application.

With this geometry, it is not possible to loosen them with the tightening socket because if this is rotated in the counterclockwise direction (loosening), the tightening socket will not contact any of the screw or nut faces.

The concept of the loosening socket will be very similar to the one of the tightening socket. In this case, the socket housing will have a cutaway material specifically designed and the "additions" of the "negative" of the sectors for loosening support. With it, the respective screw or nut can be loosened but not tightened.

The inventive idea of the screw and nut that is presented in this specification allows to resolve all of the aforementioned problems. On one hand, they could be assembled with a special wrench and left with guarantees, i.e. no one unauthorized can loosen them without having another special wrench thus achieving the character of inviolable of the corresponding assembly.

Assuming that someone wants to break the screw or nut head with a radial disc or with a drill, the tool will slip and slide over the head due to its specifically designed geometry (with angular faces and external rounding) in order to avoid these kind of operations. Moreover, the screws and nuts will be made from a high superficial hardness material which will make it difficult for any fraudulent actions to violate their integrity or to modify their mechanical functionality. And additionally, the radial discs or drills, apart from slipping and sliding, will most likely become damaged.

Another advantage that will be presented by the screw and nut of the invention, unlike the safety screws and nuts existing on the market, will reside in that they could be loosened with a special wrench - which would not damage the screws or nuts-, a wrench that is different from the one used to tighten them and only the owner of the screw and nut will possess it. For that purpose, neither the screw nor the nut will be affected by their detaching and, they could be utilized again in the same one or other assemblies.

Finally, another additional advantage consists in its relatively simple production, unlike for example, the one of special screws for automobile wheels. Because of its geometry, the screws and nuts will be able to engage with specific gadgetry prepared for this purpose, without the need to make drillings or fluting of slightly more complicated execution and thus increasing production cost.

As will be further expressed, the basic technical elements described and claimed for the present invention are based on the utilization of a screw and nut with specifically designed head with cutaway material and with different design possibilities, depending on their multiple applications.

The safety screw and nut to be protected with their respective tightening or loosening sockets can be designed, based on the merits for accomplishing their inviolability character, according to the following characteristics:
a) with different sectorization angles of their heads and with different inclination angles of their support faces. In this manner, each batch will have a unique geometry thus accomplishing, in a better way, their inviolability.
b) with different longitudinal and diametrical dimensions.
c) with different materials (steels, aluminums, bronzes, polyamides, technical plastics or any other one that can be suitable, and different treatments, superficial, thermic, anticorrosive, or any other kind that is convenient to apply to them in order to improve the fulfillment of their functions).

The screws and nuts can also be designed depending on their application, the calculation of, their maximum use and their ease of assembly.

In the accompanying drawing sheets, it can be contemplated in an illustrative and no limitative character, the following:

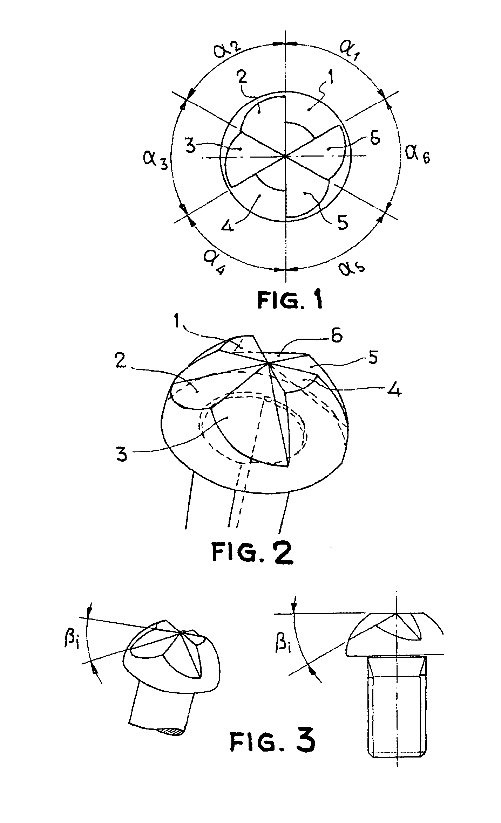

In Figure 1, a plan view wherein the sectors in which the head of the screw invention is subdivided into, are indicated.
In Figure 2, a perspective of the screw of the invention wherein the corresponding sectors in which its head is subdivided into, can be observed.
In Figure 3, a sketch with the corresponding sector angles of the head of the screw of the invention.

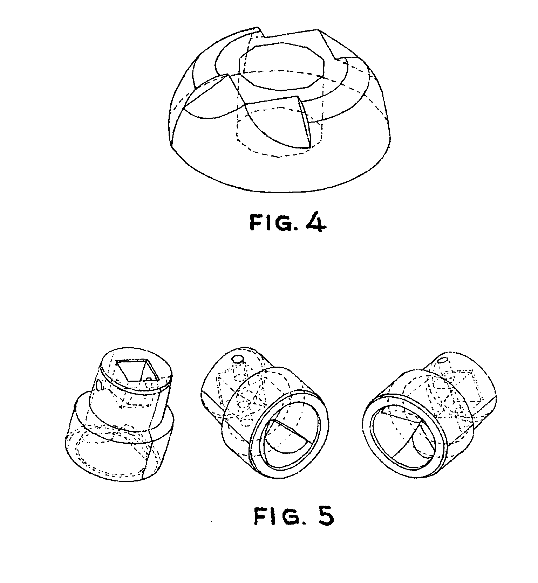

In Figure 4, a perspective of the nut of the invention wherein the corresponding sectors in which the head is subdivided into, can be observed.
In Figure 5, some perspectives of the tightening and loosening sockets applicable to the screws and nuts of the invention.

In said figures the different device elements are described with the following references:
1.- Sector 1
2.- Sector 2
3.- Sector 3
4.- Sector 4
5.- Sector 5
6.- Sector 6

### PREFERRED EMBODIMENT OF THE INVENTION

In the light of these figures, and keeping to the case of the realization of a screw according to the described and claimed invention, it can be observed that its head will be divided into sectors of different angles.
α_{I}
and wherein will be performed partial cutaways such that it will lead to two sectors for tightening and loosening (1) and (4), wherein there will not be cutaway material nor inclined faces; two sectors for tightening support (2) and (5) which respectively will be provided with inclined faces
β₂ and β₅
which will receive the forces from the tightening socket wrench and, two sector for loosening support (3) and (6) which respectively will be provided with inclined faces
β₃ and β₆
which will receive the force from the loosening socket wrench.

The *"modus operandi",* in order to carry out a mechanical joint with a screw and/or nut with these characteristics, would be the one derived from of the technical explanations given previously throughout the present description, wherein both the screw and the nut can be utilized respectively with another nuts or screw with different characteristics to those described in the present invention, or jointly.

It is not considered necessary to make this document more extensive for any one skilled in the art to be able to understand the scope of the invention in question, as well as the new effects and the technical benefits that can be derived there from. The used terms to write up this description, should always be taken in the broadest and less limitative sense resulting in compatibility with the essence of the invention to which the present document refers to.

## Claims

1. Safety screw and nut, with specific wrenches for tightening and loosening thereof, which have their heads in order to be tightened or loosened with said wrenches, **characterized in that** such heads will be divided into sectors for tightening or loosening, sectors for tightening support and sectors for loosening support, all of them with predetermined angles for each production batch.

2. Safety screw and nut, with specific wrenches for tightening and loosening thereof, according to the previous claim, **characterized in that** the sectors for tightening or loosening which will receive the forces of the respective wrenches, will not present cutaway material nor inclined faces.

3. Safety screw and nut, with specific wrenches for tightening and loosening thereof, according to previous claims, **characterized in that** the sectors for tightening support will be provided with inclined faces according to predetermined angles for each production batch.

4. Safety screw and nut, with specific wrenches for tightening and loosening thereof, according to previous claims, **characterized in that** the sectors for loosening support will be provided with inclined faces according to predetermined angles for each production batch.

5. Safety screw and nut, with specific wrenches for tightening and loosening thereof, according to previous claims, **characterized in that** the socket wrenches congruent with the safety screw and/or nut will be two: one for tightening and another one for loosening such that it is not possible to tighten with the wrench for loosening nor to loosen with the wrench for tightening.
